# EUROPÄISCHE PATENTSCHRIFT

(11) **EP 0 690 767 B1**
(45) Veröffentlichungstag und Bekanntmachung des Hinweises auf die Patenterteilung: **22.07.1998**
(21) Anmeldenummer: 93901641.6
(22) Anmeldetag: 13.01.1993
(51) Int. Cl.: B24B 9/14, G05B 19/18

(54) **VORRICHTUNG ZUM FACETTIEREN VON BRILLENGLÄSERN**
DEVICE FOR FACETTING SPECTACLE LENSES
DISPOSITIF POUR LE BISEAUTAGE DE VERRES DE LUNETTES

(30) Priorität: 13.01.1992 DE 4200637
(43) Veröffentlichungstag der Anmeldung: 10.01.1996
(73) Patentinhaber: Wernicke & Co. GmbH, 40231 Düsseldorf (DE)
(72) Erfinder: GOTTSCHALD, Lutz, D-4005 Meerbusch 2 (DE); EICKMEYER, Klaus, D-5657 Haan (DE)
(74) Vertreter: Münich, Wilhelm, Dr.
(86) Internationale Anmeldenummer: DE9300028
(87) Internationale Veröffentlichungsnummer: WO9313911

(56) Entgegenhaltungen:
- EP-A- 0 196 114
- EP-A- 0 359 596
- EP-A- 0 379 426
- EP-A- 0 433 114
- WO-A-91/03794

## Beschreibung

### Technisches Gebiet

Die Erfindung bezieht sich auf eine Vorrichtung zum Facettieren von Brillengläsern gemäß dem Oberbegriff des Patentanspruchs 1.

### Stand der Technik

Eine Vorrichtung mit den Merkmalen des Oberbegriffs des Patentanspruchs 1 ist aus der EP-A-0 196 114 bekannt. Die bekannte Vorrichtung zum Facettieren von Brillengläsern erzeugen eine Facette, deren Lage auf dem Umfangsrand des Brillenglases zwar vorgebbar in Bezug auf das Brillenglas ist, die aber in keinem Bezug zum Verlauf des Gläserrings der Fassung steht.

In einer Reihe von Fällen, beispielsweise bei Minusgläsern mit vergleichsweise großer Randdicke, führt eine derartige Facette zu einem unschönen Aussehen der fertigen Brille, da der Rand des Brillenglases ungleichmäßig in Bezug auf den Gläserring der Fassung verläuft.

### Darstellung der Erfindung

Der Erfindung liegt die Aufgabe zugrunde, eine Vorrichtung zum Facettieren von Brillengläsern gemäß dem Oberbegriff des Patentanspruchs 1, derart weiterzubilden, daß das facettierte Brillenglas nach dem Einsetzen in die Fassung gleichmäßig in Bezug auf den Gläserring der jeweiligen Fassung verläuft.

Eine erfindungsgemäße Lösung dieser Aufgabe ist im Patentanspruch 1 gekennzeichnet. Weiterbildungen der Erfindung sind Gegenstand der Ansprüche 2 folgende.

Erfindungsgemäß werden in die Steuereinheit Datensätze z 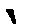 (φ) eingegeben, die den Verlauf der Fassung, in die das zu bearbeitende Brillenglas eingesetzt werden soll, in z-Richtung als Funktion von φ angeben, wobei die Steuereinheit die Lage der Facette auf dem Umfangsrand des Brillenglases aus den Datensätzen z(φ) und z 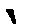 (φ) berechnet.

Damit ist es möglich, das Brillenglas ausgewogen in die Fassung einzupassen. Weiterhin wird verhindert, daß der gewählte Höhenverlauf der Facette die Fassung 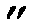 unter Spannung 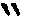 setzt. Insbesondere kann die Steuereinheit die Facette derart auf dem Umfangsrand positionieren, daß die Überstände des Brillenglases nach vorne über die Fassung an allen Stellen in etwa gleich sind (Anspruch 5). Selbstverständlich sind aber auch andere und insbesondere beliebig vorgebbare Lagen der Facette denkbar.

Dabei kann von einer an sich bekannten Facettier-Vorrichtung ausgegangen werden, bei der zur Steuerung bzw. Regelung der Facettenlage die Halterung für das Brillenglas oder - bevorzugt - die Welle für das Facettier-Werkzeug in Richtung der z-Achse, d.h. in einer Richtung, die in etwa auf dem Scheitel des Glases senkrecht steht, bzw. die in bzw. parallel zur Achse der Welle des Werkzeug verläuft, bewegbar gestaltet. Ein Antrieb, der von der Steuereinheit gesteuert wird, verschiebt das Werkzeug - bzw. die Halterung des Brillenglases derart relativ zum Umfangrand des zu facettierenden Glases, daß die Facette eine vorgebbare Lage auf dem Umfangsrand des Brillenglases hat.

Die Datensätze z 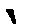 (φ) können gemaß Anspruch 3 von einem off-line angeordneten Meßgerät, wie einem Tracer gemessen und über eine Schnittstelle eingegeben werden. Alternativ können die Datensätze z 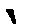 (φ) als "Stützpunkte" über ein Eingabemittel, beispielsweise eine alphanumerische Tastatur, in die Steuereinheit eingegeben werden (Anspruch 4).

Der Sensor für den 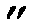 Höhenverlauf des Brillenglases 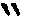 kann gemäß Anspruch 2 ein optischer Sensor sein, der die z-Koordiate vor Beginn des Facettierungsvorganges oder während des Facettierungsvorganges "on-line" ermittelt. Derartige optische Sensoren, die beispielsweise abbildende Sensoren oder Kantensensoren sein können, die auf streifendem Einfall beruhen, haben gegenüber taktilen Sensoren den Vorteil, daß das Brillenglas nicht durch einen berührenden Sensor verkratzt werden kann.

In den Ansprüchen 6 folgende sind mögliche weitere Ausgestaltungen der erfindungsgemäßen Facettier-Vorrichtung gekennzeichnet.

Eine bevorzugte Ausgestaltung weist eine Linearführung auf, die das Facettierungs-Werkzeug relativ zu dem aufgespannten Brillenglas in z-Richtung bewegt, und in der beispielsweise ein Schlitten verschiebbar geführt ist. Der Antrieb des Schlittens, der insbesondere das Werkzeug tragen kann, kann gemäß Anspruch 7 durch einen Motor erfolgen, dessen Drehbewegung über eine in an sich bekannter Weise ausgebildete Getriebeeinheit auf den Schlitten derart übertragen wird, daß dieser eine Linearbewegung ausführt.

In jedem Falle ist es bevorzugt, wenn gemäß Anspruch 8 ein Drehwinkelgeber den Drehwinkel eines Drehantriebes für den Schlitten bzw. der Motorabtriebswelle erfaßt. Hierdurch ist eine sehr exakte Regelung der Relativposition zwischen Werkzeug und Umfangsrand möglich, so daß die Lage der Facette auf dem Umfangsrand genau kontrolliert werden kann.

Als Antriebsmotoren können im Prinzip beliebige Motoren verwendet werden, solange ihr Aufbau eine genügend genaue Steuerung ihrer Drehlage zuläßt. Ein derartiger Motor ist beispielsweise ein Schrittmotor (Anspruch 9), der den Vorteil hat, daß sich mit einem derartigen Motor ein bestimmter Drehwinkel sehr "feinfühlig" einstellen läßt.

In jedem Falle ist es jedoch bevorzugt, wenn in der Antriebseinheit zwei Anschläge vorgesehen sind, die die Bewegung des Schlittens begrenzen (Anspruch 10). Hierdurch wird nicht nur eine Begrenzung des Relativverschiebeweges erreicht, sondern es ist auch ein Betriebsmodus möglich, der eine besonders effektive Facettierung auch dann gestattet, wenn keine gesteuerte Facette erforderlich ist:

Sieht man gemäß Anspruch 11 eine Rutschkupplung vor, die den Kraftfluß zwischen Motor und Schlitten unterbricht, wenn der Schlitten an einem der Anschläge anliegt, so ist alternativ oder - immer dann, wenn keine gesteuerte Facette hergestellt werden soll - alleinig auch folgende Betriebsweise möglich: Die Steuereinheit steuert immer dann, wenn keine Facette mit vorgegebenen Lage auf dem Umfangsrand hergestellt werden soll, die Antriebseinheit derart an, daß der Schlitten eine oszillierende bzw. pendelnde Bewegung ausführt, wobei die Steuereinheit die Richtung der Schlittenbewegung umkehrt, sobald ein Rutschsensor ein Rutschen der Rutschkupplung erfaßt. Hierdurch ist eine schnelle, genaue und schonende Randbearbeitung und insbesondere Facettierung möglich.

Selbstverständlich kann die erfindungsgemäß ausgebildete Vorrichtung außer einem im wesentlichen zum Facettieren geeigneten Werkzeug auch weitere Werkzeuge aufweisen, die insbesondere auf der gleichen Achse angeordnet sind. Diese Werkzeuge können nicht nur zur Randbearbeitung und insbesondere zum Randen oder Facettieren, sondern auch zum Entgraten eingesetzt werden. Dabei ist es bevorzugt, wenn die Steuereinheit die gespeicherten bzw. on-line erfaßten Datensätze auch zum Ausführen anderer Tätigkeiten, beispielsweise zum Entgraten nutzt (Anspruch 13).

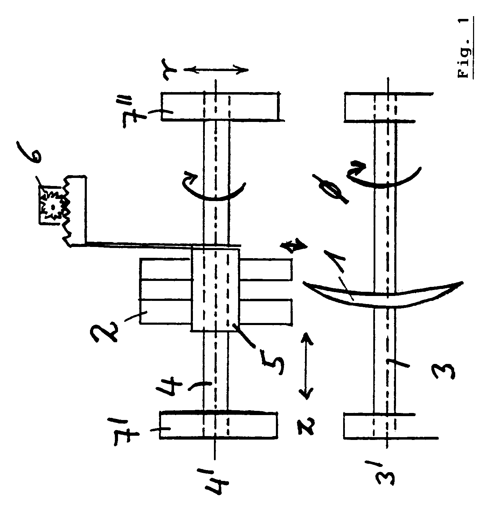

### Kurze Beschreibung der Zeichnung

Die Erfindung wird nachstehend anhand eines Ausführungsbeispiels unter Bezugnahme auf die Zeichnung näher beschrieben,
deren einzige Figur schematisch eine Seitenansicht einer Vorrichtung zum Facettieren zeigt.

### Beschreibung eines Ausführungsbeispiels

In der Zeichnung ist eine Vorrichtung zum Facettieren eines Brillenglases 1 dargestellt. Die Vorrichtung weist ein Facettierungs-Werkzeug 2 auf, das aus einer Reihe von nicht näher dargestellten Einzelwerkzeugen besteht, die nacheinander in Eingriff mit dem in einer Aufspannung 3 gehaltenen Brillenglas 1 bringbar sind und unterschiedliche Bearbeitungsvorgänge ausführen. Wenigstens eines der Einzelwerkzeuge ist eine Vorschleifscheibe. Das Facettierungs-Werkzeug ist auf einer Spindel 4 angeordnet, die um ihre Längsachse 4' drehbar ist, und die durch eine nicht näher dargestellte Verschiebeeinheit in Richtung des Radius r des Brillenglases 1 verschiebbar ist, so daß die "Zustellung" des Facettierungs-Werkzeuges 2 in Bezug auf das Brillenglas 1 einstellbar ist.

In an sich bekannter Weise ist eine nicht dargestellte Steuereinheit vorgesehen, die insbesondere eine elektronische Steuereinheit ist, und die die Zustellung des Facettierungs-Werkzeuges 2 in r-Richtung auf das Brillenglas 1 in Abhängigkeit vom Drehwinkel φ des Brillenglases um die Längsachse 3' der Aufspannung steuert. Hierzu sind in der Steuereinheit die Soll-Daten für den Radius r des zu bearbeitenden Brillenglases 1 in Abhängigkeit vom Drehwinkel φ des Brillenglases 1 um die Aufspannung 3 gespeichert.

Erfindungsgemäß ist das Facettierungs-Werkzeug 2 auf einem Schlitten 5 angeordnet, der in Richtung der Achse der Spindel 4, d.h. in Richtung der z-Achse durch einen Antrieb verschiebbar ist. Hierzu ist ein Motor 6 vorgesehen, durch dessen Drehbewegung über eine Getriebeeinheit der Schlitten 5 in z-Richtung bewegt wird. Der Motor 6 ist bevorzugt ein Schrittmotor. Ferner sind zwei Anschläge 7' und 7'' vorgesehen, die die Bewegung des Schlittens 5 in z-Richtung begrenzen. Eine nicht dargestellte Rutschkupplung unterbricht den Kraftfluß zwischen Motor 6 und Schlitten 5, wenn der Schlitten 5 an einem Anschläge 7 anliegt. Die Rutschkupplung, die insbesondere eine elektromagnetische Rutschkupplung mit einstellbarem Rutschmoment sein kann, dient ferner zur Begrenzung der Meß- und Anlagekraft.

Weiterhin sind Sensoren für die Lage des Umfangsrandes und/oder die auftretenden Kräfte vorgesehen. Der Sensor für die Lage des Umfangrandes kann beispielsweise ein optischer Sensor sein, der die z-Koordinate vor Beginn des Facettierungsvorganges oder während des Facettierungsvorganges "on-line" ermittelt.

Erfindungsgemäß werden in die Steuereinheit Datensätze z 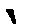 (φ) eingegeben, die den Verlauf der Fassung, in die das zu bearbeitende Brillenglas 1 eingesetzt werden soll, in z-Richtung als Funktion von φ angeben. Diese Datensätze z 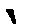 (φ) können beispielsweise von einem off-line angeordneten Meßgerät, wie einem Tracer gemessen und über eine Schnittstelle eingegeben werden. Alternativ können die Datensätze z 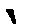 (φ) als "Stützpunkte" über ein Eingabemittel, beispielsweise eine alphanumerische Tastatur, in die Steuereinheit eingegeben werden.

In jedem Falle ermöglicht die erfindungsgemäße Vorrichtung die Steuerung der Relativbewegung des Werkzeuges in Richtung der z-Achse derart, daß die Facette eine vorgebbare Lage auf dem Umfangsrand des Brillenglases hat, wobei die Steuereinheit die Lage der Facette auf dem Umfangsrand des Brillenglases aus den gespeicherten bzw. ermittelten und eingegebenen Datensätzen berechnet. Weiterhin können die in der Steuereinheit gespeicherten Datensätze auch für den Entgratprozeß genutzt werden.

Wenn keine Facette mit vorgegebenen Lage auf dem Umfangs rand des Brillenglases 1 hergestellt werden soll, führt der Schlitten 5 eine oszillierende Bewegung aus, wobei die Steuereinheit die Richtung der Schlittenbewegung umkehrt, wenn ein Rutschsensor ein Rutschen der Rutschkupplung erfaßt.

## Patentansprüche

1. Vorrichtung zum Facettieren von Brillengläsern, mit
- wenigstens einem Facettierungs-Werkzeug (2),
- einer Aufspannung (3) für ein Brillenglas (1), die um ihre Längsachse (3') zusammen mit dem Brillenglas (1) drehbar ist, und deren Zustellung in radialer Richtung in Bezug auf das Facettierungs-Werkzeug (2) einstellbar ist,
- einem Sensor, der die parallel zur Längsachse (3 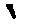 ) orientierte z-Koordinate des Umfangsrandes des Brillenglases als Funktion der Drehstellung φ des Brillenglases bezogen auf die Längsachse (3 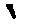 ) der Aufspannung (3) erfaßt, und
- einer Steuereinheit für das Facettierungs-Werkzeug und die Aufspannung, an der das Ausgangssignal z(φ) des Sensors anliegt, und in der die Soll-Daten r(φ) für den Radius r des zu bearbeitenden Brillenglases als Funktion der Drehstellung (φ) gespeichert sind, und die entsprechend den Soll-Daten r(φ) die Zustellung und zusätzlich die Relativbewegung des Werkzeuges und der Aufspannung in Richtung der z-Achse derart steuert, daß die Facette eine bestimmte Lage auf dem Umfangsrand des Brillenglases hat,
dadurch **gekennzeichnet**, daß in die Steuereinheit Datensätze z 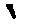 (φ) eingegeben werden, die den Verlauf der Fassung, in die das zu bearbeitende Brillenglas eingesetzt werden soll, in z-Richtung als Funktion von φ angeben, und
daß die Steuereinheit die Lage der Facette auf dem Umfangsrand des Brillenglases aus den Datensätzen z(φ) und z 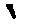 (φ) berechnet.

2. Vorrichtung nach Anspruch 1,
dadurch **gekennzeichnet**, daß der Sensor ein optischer Sensor ist, der die z-Koordinate des Brillenglases vor Beginn des Facettierungsvorganges oder während des Facettierungsvorganges "on-line" ermittelt.

3. Vorrichtung nach Anspruch 1 oder 2,
dadurch **gekennzeichnet**, daß die Datensätze z 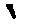 (φ) von einem off-line angeordneten Meßgerät, wie einem Tracer gemessen und über eine Schnittstelle eingegeben werden.

4. Vorrichtung nach Anspruch 1 oder 2,
dadurch **gekennzeichnet**, daß die Datensätze z 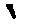 (φ) als "Stützpunkte" über ein Eingabemittel, beispielsweise eine alphanumerische Tastatur, in die Steuereinheit eingegeben werden.

5. Vorrichtung nach einem der Ansprüche 1 bis 4,
dadurch **gekennzeichnet**, daß die Steuereinheit die Facette derart auf dem Umfangsrand positioniert, daß die Überstände des Brillenglases nach vorne über die Fassung an allen Stellen in etwa gleich sind.

6. Vorrichtung nach einem der Ansprüche 1 bis 5,
dadurch **gekennzeichnet**, daß eine Linearführung vorgesehen ist, die das Facettierungs-Werkzeug relativ zu dem aufgespannten Brillenglas in z-Richtung bewegt.

7. Vorrichtung nach Anspruch 6,
dadurch **gekennzeichnet**, daß ein Motor vorgesehen ist, durch dessen Drehbewegung über eine Getriebeeinheit ein Schlitten, der das Facettierungs-Werkzeug oder die Aufspannung für das Brillenglas trägt, in z-Richtung bewegt wird.

8. Vorrichtung nach Anspruch 7,
dadurch **gekennzeichnet**, daß ein Drehwinkelgeber den Drehwinkel eines Drehantriebes für den Schlitten bzw. der Motorabtriebswelle erfaßt.

9. Vorrichtung nach Anspruch 7 oder 8,
dadurch **gekennzeichnet**, daß der Motor ein Schrittmotor ist.

10. Vorrichtung nach Anspruch 8 oder 9,
dadurch **gekennzeichnet**, daß zwei Anschläge vorgesehen sind, die die Bewegung des Schlittens begrenzen.

11. Vorrichtung nach Anspruch 10,
dadurch **gekennzeichnet**, daß eine Rutschkupplung vorgesehen ist, die den Kraftfluß zwischen Motor und Schlitten unterbricht, wenn der Schlitten an einem Anschlag anliegt.

12. Vorrichtung nach Anspruch 11,
dadurch **gekennzeichnet**, daß dann, wenn keine Facette mit vorgegebenen Lage auf dem Umfangsrand hergestellt werden soll, der Schlitten eine oszillierende Bewegung ausführt, wobei die Steuereinheit die Richtung der Schlittenbewegung umkehrt, wenn ein Rutschsensor ein Rutschen der Rutschkupplung erfaßt.

13. Vorrichtung nach einem der Ansprüche 1 bis 12,
dadurch **gekennzeichnet**, daß die in der Steuereinheit gespeicherten Datensätze r(φ) sowie gegebenenfalls auch die Datensätze z(φ) und z 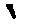 (φ) auch für den Entgratprozeß genutzt werden.

## Claims

1. An apparatus for facetting ophthalmic lenses having
- at least one facetting tool (2),
- a grip (3) for an ophthalmic lens (1), which can be rotated about its longitudinal axis (3') together with said ophthalmic lens (1) and whose transport in radial direction relative to said facetting tool (2) is adjustable,
- a sensor which detects the z coordinates of the peripheral edge of said ophthalmic lens oriented parallel to said longitudinal axis (3') as the function of the rotation position φ of said ophthalmic lens relative to said longitudinal axis of said grip (3), and
- a control unit for said facetting tool and said grip, to which the output signal z(φ) of said sensor is applied, and, in which the scheduled data r(φ) for the radius r of said ophthalmic lens to be processed are stored as a function of said rotation position (φ), and which regulates the transport according to said scheduled data r(φ) and, in addition, regulates the relative movement of said tool and said grip in the direction of the z axis, in such a manner that the facet has a specific position on said peripheral edge of said ophthalmic lens,
**characterized by** sets of data z'(φ) giving the course in the z direction of the eyeglass frames, into which the ophthalmic lens to be processed is to be inserted, as a function of φ being entered into said control unit, and by said control unit computing the position of the facet on said peripheral edge of said ophthalmic lens from said sets of data z(φ) and z'(φ).

2. An apparatus according to claim 1,
**characterized by** said sensor being an optical sensor which determines 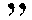 on-line 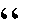 said z coordinates of said ophthalmic lens prior to the commencement of the facetting step or during the facetting step.

3. An apparatus according to claim 1 or 2,
**characterized by** said sets of data z'(φ) being measured by an off-line measurement device, such as a tracer, and entered via an interface.

4. An apparatus according to claim 1 or 2,
**characterized by** said sets of data z'(φ) being entered into said control unit as 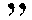 points of measurement 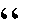 via a feeding means, by way of illustration an overlay keyboard.

5. An apparatus according to one of the claims 1 to 4,
**characterized by** said control unit positioning the facet on said peripheral edge in such a manner that protrusions of said ophthalmic lens to the front over the eyeglass frames are the same at all points.

6. An apparatus according to one of the claims 1 to 5,
**characterized by** a linear guide being provided which moves said facetting tool relative to the gripped ophthalmic lens in the z direction.

7. An apparatus according to claim 6,
**characterized by** a motor being provided through the rotary movement of which a slide bearing said facetting tool or said grip for said ophthalmic lens, is moved in the z direction via a transmission unit.

8. An apparatus according to claim 7,
**characterized by** an angle of rotation sensor determining the angle of rotation of a rotary drive for said slide, respectively the motor drive shaft.

9. An apparatus according to claim 7 or 8,
**characterized by** said motor being a step-by-step motor.

10. An apparatus according to claim 8 or 9,
**characterized by** two stops being provided which limit the movement of said slide.

11. An apparatus according to claim 10,
**characterized by** a slipping clutch being provided which interrupts the power flow between said motor and said slide when said slide is at one of said stops.

12. An apparatus according to claim 11,
**characterized by** said slide executing an oscillating movement if no facet having a specific position on said peripheral edge is to be produced, with said control unit reversing the direction of said slide movement if a slipping sensor detects a slip of said slipping clutch.

13. An apparatus according to one of the claims 1 to 12,
**characterized by** also being able to utilize for the deburring step the sets of data r(φ) stored in said control unit as well as, if need be, said sets of data z(φ) and z'(φ).

## Revendications

1. Dispositif de biseautage de verres de lunettes, comportant
- au moins un outil de biseautage (2),
- un dispositif de fixation (3) pour un verre de lunettes (1), qui peut tourner autour de son axe longitudinal (3') conjointement avec le verre de lunettes (1) et dont l'avance dans une direction radiale par rapport à l'outil de biseautage (2) est réglable,
- un capteur, qui détecte la coordonnée z, comptée parallèlement à l'axe longitudinal (3'), du bord circonférentiel du verre de lunettes en fonction de la position de rotation φ du verre de lunettes par rapport à l'axe longitudinal (3') du dispositif de fixation (3), et
- une unité de commande pour l'outil de biseautage et le dispositif de fixation à laquelle est envoyé le signal de sortie z(φ) du capteur et dans laquelle les données de consigne r(φ) pour le rayon r du verre de lunettes devant être traité sont mémorisées en fonction de la position de rotation (φ) et qui commande, en fonction des données de consigne r(φ), l'avance et en outre le déplacement relatif de l'outil et du dispositif de fixation dans la direction de l'axe z de telle sorte que la facette possède une position déterminée sur le bord circonférentiel du verre de lunettes,
caractérisé en ce que dans l'unité de commande sont introduits des ensembles de données z'(φ), qui indiquent la forme de la monture, dans laquelle doit être inséré le verre de lunettes à traiter, dans la direction z en fonction de φ, et que l'unité de commande calcule la position de la facette sur le bord périphérique du verre de lunettes à partir des ensembles de données z(φ) et z'(φ).

2. Dispositif selon la revendication 1, caractérisé en ce que le capteur est un capteur optique, qui détermine "on-line" la coordonnée z du verre de lunettes avant le début de l'opération de biseautage ou pendant l'opération de biseautage.

3. Dispositif selon la revendication 1 ou 2, caractérisé en ce que les ensembles de données z'(φ) sont mesurés par un appareil de mesure monté off-line, comme par exemple un traceur de courbes, et sont introduits par l'intermédiaire d'une interface.

4. Dispositif selon la revendication 1 ou 2, caractérisé en ce que les ensembles de données z'(φ) sont introduits dans l'unité de commande en tant que "points d'appui" par l'intermédiaire de moyens d'entrée, par exemple d'un clavier alphanumérique.

5. Dispositif selon l'une des revendications 1 à 4, caractérisé en ce que l'unité de commande positionne la facette sur le bord circonférentiel de telle sorte que les parties saillantes du verre de lunettes vers l'avant au-delà de la monture sont approximativement identiques dans toutes les positions.

6. Dispositif selon l'une des revendications 1 à 5, caractérisé en ce qu'il est prévu un guide linéaire, qui déplace dans la direction z l'outil de biseautage par rapport au verre de lunettes fixé.

7. Dispositif selon la revendication 6, caractérisé en ce qu'il est prévu un moteur, dont le mouvement de rotation provoque par l'intermédiaire d'une unité de transmission le déplacement, dans la direction z, d'un chariot, qui porte l'outil de biseautage ou le dispositif de fixation pour le verre de lunettes.

8. Dispositif selon la revendication 7, caractérisé en ce qu'un capteur d'angle de rotation détecte l'angle de rotation d'un dispositif d'entraînement en rotation pour le chariot ou l'arbre de sortie du moteur.

9. Dispositif selon la revendication 7 ou 8, caractérisé en ce que le moteur est un moteur pas-à-pas.

10. Dispositif selon la revendication 8 ou 9, caractérisé en ce qu'il est prévu deux butées qui limitent le déplacement du chariot.

11. Dispositif selon la revendication 10, caractérisé en ce qu'il est prévu un embrayage patinant, qui interrompt le flux de force entre le moteur et le chariot lorsque le chariot s'applique contre une butée.

12. Dispositif selon la revendication 11, caractérisé en ce que lorsqu'aucune facette ayant une position prédéterminée ne doit être fabriquée sur le bord périphérique, le chariot exécute un déplacement oscillant, auquel cas l'unité de commande inverse la direction du déplacement du chariot lorsqu'un capteur de patinage détecte un patinage de l'accouplement patinant.

13. Dispositif selon l'une des revendications 1 à 12, caractérisé en ce que les ensembles de données r(φ) mémorisés dans l'unité de commande ainsi que, éventuellement, les ensembles de données z(φ) et z'(φ) sont également utilisés pour le processus d'ébavurage.
